# EUROPÄISCHE PATENTSCHRIFT

(11) **EP 0 673 663 B1**
(45) Veröffentlichungstag und Bekanntmachung des Hinweises auf die Patenterteilung: **19.08.1998**
(21) Anmeldenummer: 95102677.2
(22) Anmeldetag: 24.02.1995
(51) Int. Cl.: B01D 17/025, B01D 17/00

(54) **Abscheideanlage**
Separator
Séparateur

(30) Priorität: 24.03.1994 DE 9405070 U
(43) Veröffentlichungstag der Anmeldung: 27.09.1995
(73) Patentinhaber: Kessel, Bernhard, D-85101 Lenting (DE)
(72) Erfinder: Kessel, Bernhard, D-85101 Lenting (DE)
(74) Vertreter: Grünecker, Kinkeldey, Stockmair & Schwanhäusser Anwaltssozietät

(56) Entgegenhaltungen:
- DE-A- 3 011 482
- DE-A- 4 140 992
- DE-U- 9 308 652
- DE-U- 9 314 048

## Beschreibung

Die Erfindung betrifft eine Abscheideanlage der im Oberbegriff des Patentanspruchs 1 angegebenen Art.

Bei einer aus DE-U-93 08 652 bekannten Abscheideanlage weist die Hilfsströmungsverbindungs-Einrichtung eine einzige Leitung auf, die im Fangbehälter unterhalb des Betriebswasserspiegels beginnt und im Abscheidebehälter unterhalb des Abscheideniveaus der Schwimmstoffe endet. In dieser Leitung sind die Pumpe und das Absperrorgan enthalten. Diese Leitung ermöglicht bei der Eigenentsorgung der Schwimmstoffe über den geöffneten Schwimmstoffabzug die Nutzung eines ausreichenden Abwasservolumens im Fangbehälter zum Herausdrücken der Schwimmstoffe, z.B. falls der Betriebswasserspiegel im Fangbehälter unter den Einlaß der Überströmleitung sinken sollte. Zusätzlich läßt sich mit der Pumpe in der Leitung Abwasser aus dem Abscheidebehälter in den Fangbehälter rückführen, beispielsweise, um Sinkstoffe aus dem Abscheidebehälter zu entfernen oder im Fangbehälter abgeschiedene Schwimmstoffe in den Abscheidebehälter zu überführen. Für jede der vorerwähnten Funktionen sind korrekte Betätigungen des Absperrorgans bzw. der Pumpe erforderlich, mit denen der Betreiber oder das Hilfspersonal des Betreibers der Abscheideanlage wegen Unkenntnis oder Nachlässigkeit häufig überfordert sind. Bei einem automatischen Betrieb der Abscheideanlage ist zwar die korrekte Betätigung der Pumpe und des Absperrorgans sichergestellt; jedoch können sich Pumpe und Absperrorgan gegenseitig unerwünscht beeinflussen.

Außerdem muß sich in der einzigen Leitung die Abwasser-Rückführfunktion der Funktion, der Übertragung des hydrostatischen Drucks und dem Nachführen des zum Eigenentsorgen eingesetzten Volumens, unterordnen, wodurch für die Rückführfunktion funktionelle Nachteile in Kauf zunehmen sind.

Der Erfindung liegt die Aufgabe zugrunde, eine Abscheideanlage der eingangs genannten Art baulich zu vereinfachen und hinsichtlich ihrer Bedienungssicherheit und der Effizienz der einzelnen Funktionen zu verbessern.

Die gestellte Aufgabe wird erfindungsgemäß mit den im Patentanspruch 1 enthaltenen Merkmalen gelöst.

Durch die Aufteilung der Hilfsströmungsverbindungs-Einrichtung auf zwei Leitungen wird nicht nur eine gegenseitige Beeinflussung von Pumpe und Absperrorgan beseitigt, sondern vor allem eine erhöhte Bedienungssicherheit erreicht. Der Betreiber oder das Hilfspersonal des Betreibers wird bei manueller Betätigung keine Bedienungsfehler mehr vornehmen, da die Bedienung einfach und unmißverständlich ist. Das Absperrorgan ist nur zum Eigenentsorgen von Schwimmstoffen zu öffnen und danach zu schließen. Die Pumpe wird hauptsächlich zum Rückführen und Überführen von Schwimmstoffen benutzt. Die Pumpe beeinflußt weder die Übertragung des hydrostatischen Drucks noch das Nachlaufen des zum Herausdrücken der Schwimmstoffe eingesetzten Volumens. Das Absperrorgan bildet keine Drosselstelle beim Rückpumpen von Reinwasser . Beide Leitungen lassen sich ohne gegenseitige Beeinträchtigung ausschließlich im Hinblick auf die gewünschte Funktion in die Abscheideanlage eingliedern. Dadurch ist die zweite Funktion nicht mehr der ersten untergeordnet. In den Abscheidebehälter gelangte Sinkstoffe lassen sich rasch und weitestgehend vollständig in den Fangbehälter rückführen. Im Fangbehälter abgeschiedene Schwimmstoffe werden wirksam bei Bedarf durch Rückpumpen aufgebrochen und in den Abscheidebehälter überführt. Für automatischen Betrieb läßt sich die übergeordnete Steuervorrichtung einfach auslegen.

Eine einfache Ausführungsform geht aus Anspruch 2 hervor. Bei diesem Verlauf der ersten Leitung sind die Übertragung des hydrostatischen Drucks und das Nachlaufen des Volumens zuverlässig gewährleistet. Außerdem lassen sich die Einlaßmündung und die Auslaßmündung so positionieren, daß durch die erste Leitung möglichst wenig Sinkstoffe in den Abscheidebehälter gelangen, und im Abscheidebehälter vorhandene Sinkstoffe die Funktion nicht stören.

Bei der alternativen Ausführungsform gemäß Anspruch 3 wird eine bauliche Verinfachung erreicht, weil die erste Leitung kurz ist und die Überströmleitung zur Druckübertragung und zum Nachlaufen des Volumens heranzieht. Diese Ausführungsform ist von eigenständiger und wichtiger Bedeutung, unabhängig davon, ob die zweite Leitung vorhanden ist, oder nicht.

Eine weitere, besonders wichtige Ausführungsform geht aus Anspruch 4 hervor. Es lassen sich mit dem Standrohr verbesserte Überströmverhältnisse für das Abwasser schaffen. Außerdem kann der Abscheidebehälter näher an den Fangbehälter herangesetzt werden, was Platz und Leitungslängen spart. Dieses Bauprinzip ist unabhängig davon einsetzbar, ob eine Hilfsströmungsverbindung aus einer oder aus zwei getrennten Leitungen vorgesehen ist.

Im Zusammenhang mit der vorerwähnten Ausführungsform ist die Ausbildung gemäß Anspruch 5 vorteilhaft, weil sie ohne bauliche Modifikationen am Abscheidebehälter eine weitere bauliche Vereinfachung durch eine kurze erste Leitung ermöglicht.

Bei der Ausführungsform gemäß Anspruch 6 hat die erste Leitung als Halterung des Standrohres im Fangbehälter eine Zusatzfunktion.

Eine einfache und funktionssichere Ausführungsform geht aus Anspruch 7 hervor. Bei der Druckübertragungsfunktion und zum Nachführen des Volumens wird die vom Absperrorgan freigemachte Öffnung im Standrohr eingesetzt. Dies ist herstellungs- und montagetechnisch günstig und hält die Druckdifferenz und den Strömungswiderstand niedrig.

Für die Praxis ist die Ausführungsform gemäß Anspruch 8 vorteilhaft, weil dieses Volumen auch bei hohem Anfall an Schwimmstoffen ausreicht, große und verhältnismäßig frische Chargen an Schwimmstoffen zügig zu entsorgen. Sind die Schwimmstoffe Fett, dann läßt sich dieses in relativ frischem Zustand weiterverwenden. Das angegebene Volumen stellt ferner sicher, daß beim Fettabzug keine die Funktion störende Luft im Abscheidebehälter gefangen wird.

Bei der Ausführungsform gemäß Anspruch 9 ist eine einfache und kostengünstige Pumpe einsetzbar, die auch bei stark verschmutztem Abwasser störungsfrei arbeitet.

Bei der Ausführungsform gemäß Anspruch 10 lassen sich am Boden des Abscheidebehälters vorliegende Sinkstoffe weitestgehend und rasch rückführen. Ferner läßt sich durch die hochgesetzte Lage der Mündung in etwa auf der Höhe des Betriebswasserspiegels eine bei einer längeren Betriebspause oder aus anderen Gründen im Fangbehälter abgeschiedene Schwimmstoffschicht zügig in den Abscheidebehälter überführen und gegebenenfalls wirksam aufbrechen. Zweckmäßigerweise befindet sich die Mündung der zweiten Leitung im Fangbehälter sogar oberhalb des Betriebswasserspiegels, so daß im Betrieb kein Abwasser in die zweite Leitung gelangt und die Mündung nicht nennenswert verschmutzt wird.

Bei der Ausführungsform gemäß Anspruch 11 werden verbesserte Einströmverhältnisse für das Abwasser in die Über- strömleitung erreicht, da Dank der schrägen Lage der Anschlußmündung das Abwasser weitgehend unabhängig von der Höhe des Betriebswasserspiegels rasch und geführt einläuft. Schwimmstoffe werden wirksam mitgerissen. Wenn die Abschrägung zum nächstliegenden Wandbereich abfällt, werden Schwimmstoffe bei niedrigem Betriebswasserspiegel bevorzugt von der Wand weggezogen und in den Abscheidebehälter geleitet. Dieses Merkmal ist unabhängig von einer Hilfsströmungsverbindung vorteilhaft.

Bei der Ausführungsform gemäß Anspruch 12 werden durch die willkürlich verlängerte Einlaufkante ein großer Strömungsdurchsatz und bei niedrigem Betriebswasserspiegel und kleinem Strömungsdurchsatz eine wünschenswert hohe Strömungsgeschwindigkeit erreicht.

Bei der Ausführungsform gemäß Anspruch 13 werden im Abscheidebehälter am Boden vorliegende Sinkstoffe wirksam über den Absaugtrichter aufgenommen und mittels der Pumpe über die zweite Leitung in den Fangbehälter rückge- führt.

Anhand der Zeichnungen werden Ausführungsformen des Erfindungsgegenstandes erläutert. Es zeigen:
**Fig. 1** eine schematische Seitenansicht einer Abscheideanlage,
**Fig. 2** eine schematische Seitenansicht einer weiteren Auführungsform einer Abscheideanlage, **Fig. 3** einen Teilschnitt einer dritten Ausführungsvariante,
**Fig. 4** einen Teilschnitt einer vierten Ausführungsvariante, und
**Fig. 5** eine Detailvariante.

Eine Abscheideanlage F, z.B. eine Fettabscheideanlage, die zur Eigenentsorgung von zumindest Schwimmstoffen durch hydrostatischen Druck ausgelegt ist, weist einen tonnenförmigen Sinkstoff-Fangbehälter S und wenigstens einen in Strömungsrichtung nachgeordneten SchwimmstoffAbscheidebehälter A auf. Der Fangbehälter S und der Abscheidebehälter A können aus Kunststoffelementen zusammengesetzt sein. In den Fangbehälter S mündet ein auf einem Niveau N1 liegender Zulauf 1. Der Fangbehälter S ist oben durch einen Deckel 2 verschlossen und steht mit dem Abscheidebehälter A über eine S-förmige Überström- leitung 3 in Verbindung.

Die Überströmleitung 3 besitzt einen im Fangbehälter S auf einem Niveau N2 liegenden Einlaß 4. Das Niveau N2 entspricht annähernd dem Betriebs-Wasserspiegel im Fangbehälter S. Der Abscheidebehälter A wird ohne Freispiegel betrieben. Ein Auslaß 5 der Überströmleitung 3 befindet sich etwa im oberen Drittel des Abscheidebehälters A, von dem eine Ablaufleitung 8 zu einem auf ein Niveau N3 hochgesetzten Ablauf 7 führt. Zwischen dem Zulauf 1 und dem Ablauf 7 erstreckt sich ein Entlüftungs-Leitungsstrang 6, der nach außen geruchsdicht abgeschlossen ist und gegebenenfalls Probeentnahmeöffnungen aufweist.

Auf dem Abscheidebehälter A ist oben abgedichtet ein z.B. kuppelförmiger Dom 9 befestigt, in dem eine Heizeinrichtung (nicht gezeigt) enthalten sein kann. Oben im Dom 9 ist ein Fettabzug Z auf einem Niveau N4 angeordnet, der einen Anschluß 10 zum Inneren des Domes 9 sowie ein Absperrorgan 11 aufweist, von dem eine Ablaufleitung 12 zu einem Container C für Schwimmstoffe verläuft.

Das Niveau N1, der Betriebswasserspiegel bzw. das Niveau N2 und das Niveau N3 liegen höher als das Niveau N4 des Schwimmstoffabzugs Z, damit im Abscheidebehälter A oben abgeschiedene Schwimmstoffe, z.B. Fett, (verflüssigt oder flüssiggehalten mittels der Heizeinrichtung im Dom 9) durch hydrostatischen Abwasserdruck bei geöffnetem Absperrorgan 11 in den Container C entsorgbar sind.

Im Bodenbereich des Fangbehälters S ist ein Ablaufanschluß 13 vorgesehen, an den eine Ablaufleitung 15 zu einem Container C angeschlossen ist. In der Ablaufleitung 15 ist ein Absperrorgan 14 enthalten, das zum Entsorgen der Sinkstoffe aus dem Fangbehälter S nutzbar ist.

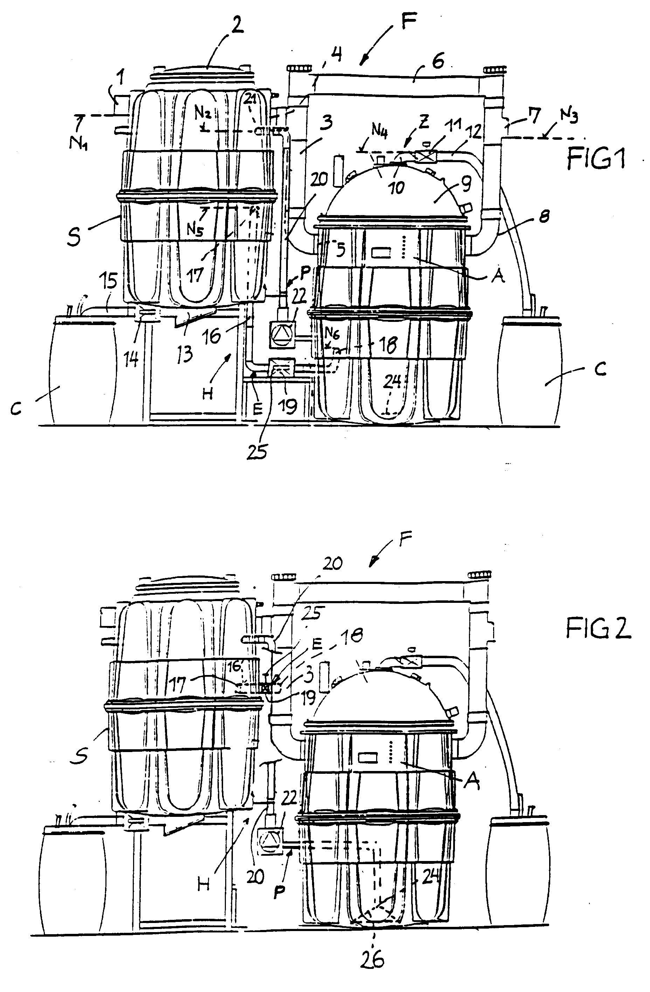

Der Fangbehälter S ist relativ zum Abscheidebehälter A höher gesetzt. Es ist aber auch denkbar, den Abscheidebehälter A gegenüber dem Fangbehälter S tiefer zu setzen, oder beide Maßnahmen zu kombinieren, um die für die Eigenentsorgung notwendigen Niveauunterschiede zu erzeugen.
Eine zwischen dem Fangbehälter S und dem Abscheidebehälter A vorgesehene Hilfsströmungsverbindungs-Einrichtung H besteht aus zwei getrennten Leitungen E und P. In Fig. 1 ist die erste Leitung E eine Rohrleitung 16, deren Einlaßmündung 17 im Fangbehälter S auf einem Niveau N5 angeordnet ist, das deutlich unterhalb des Niveaus N2 und deutlich oberhalb des Niveaus liegt, in dem sich im Fangbehälter S Sinkstoffe unten abscheiden. Die erste Leitung E, 16 enthält ein Absperrorgan 19 und führt in den Abscheidebehälter A. Dort befindet sich ihre Auslaßmündung 18 auf einem Niveau N6, das deutlich oberhalb des Bodens des Abscheidebehälters A und unterhalb des Niveaus liegt, auf dem sich Schwimmstoffe abscheiden. Das Absperrorgan 19 läßt sich wahlweise öffnen und schließen. Die zweite Leitung P ist in Fig. 1 eine Rohrleitung 20, die im Fangbehälter S eine in etwa auf der Höhe des Niveaus N2 bzw. beim Betriebswasserspiegel oder darüber liegende Mündung 21 besitzt. In der zweiten Leitung P, 20 ist eine Pumpe 22 mit Förderrichtung zum Fangbehälter S vorgesehen. Die zweite Leitung 20 hat ihre andere Mündung (bei 24 strichliert angedeutet) in der Nähe des Bodens des Abscheidebehälters.

### Funktion:

Bei normalem Abscheidebetrieb steht die Pumpe 22. Das Absperrorgan 19 sperrt die erste Leitung E ab. Das Absperrorgan 11 ist geschlossen. Abwasser läuft durch den Zulauf 1 zu. Im Fangbehälter S scheiden sich sinkstoffe ab. Mit Schwimmstoffen verunreinigtes Abwasser gelangt über die Überströmleitung 3 in den Abscheidebehälter A, der ohne Freispiegel betrieben wird. Die Schwimmstoffe sammeln sich in einer Schicht im Dom 9 und direkt am Schwimmstoffabzug Z. Reinwasser steigt aus dem Abscheidebehälter A durch die Ablaufleitung 8 bis zum Ablauf 7 und läuft von dort ab.

Nach einer vorwählbaren Zeitdauer oder bei durch nicht im Detail hervorgehobene Überwachungsinstrumente (Meßsonden, Schaugläser oder dergleichen) festgestelltem Entsorgungsbedarf wird das Absperrorgan 11 geöffnet und, falls erforderlich, zuvor die Heizeinrichtung im Dom 9 eingeschaltet. Aufgrund des hydrostatischen Drucks werden die Schwimmstoffe durch den Schwimmstoffabzug Z herausgedrückt und im Container C gesammelt, der zweckmä- ßigerweise entlüftet oder über eine Entlüftungsleitung mit der Abscheideanlage F verbunden ist. Nach einer vorbestimmten Entsorgungsdauer oder bei Füllung des Containers C wird das Absperrorgan 11 wieder geschlossen. Der gefüllte Container C kann entsorgt werden.

Falls während der Entsorgung genügend Abwasser durch den Zulauf 1 zuläuft, braucht das Absperrorgan 19 nicht geöffnet zu werden. Zweckmäßigerweise wird aber das Absperrorgan 19 geöffnet, vor allem dann, wenn während der Entsorgung der Schwimmstoffe nicht genügend Abwasser nachlaufen sollte und der Betriebswasserspiegel unter das Niveau N2 zu fallen droht. Durch die Öffnung des Absperrorgans 19 wird nämlich zum Herausdrücken der Schwimmstoffe ein Abwasservolumen nutzbar, das im Fangbehälter S zwischen den Niveaus N2 und vorliegt und über die erste Leitung E im Abscheidebehälter A wirkt. Der Niveauunterschied zwischen den Niveaus N2 und N5 ist zweckmäßigerweise auf die maximal bei einem Entsorgungsvorgang zu entsorgende Schwimmstoffmenge abgestimmt. Das nutzbare Volumen liegt z.B. mindestens bei 80 l. Ist der Entsorgungsvorgang abgeschlossen, dann wird das Absperrorgan 19 wieder geschlossen.

In durch eine Zeitschaltung oder auf andere Weise vorbestimmten Zeitabständen wird die Pumpe 22 eingeschaltet, um die Anlage rückzuspülen. Dabei werden eventuell in den Abscheidebehälter A gelangte Sinkstoffe in den Fangbehälter S rückgefördert, und werden die Inhalte in beiden Behältern gemischt. Auch lassen sich im Fangbehälter S abgeschiedene Schwimmstoffe aufbrechen und in den Abscheidebehälter A überführen. Dies ist insbesondere dann zweckmäßig, wenn bei längeren Betriebspausen der Betriebswasserspiegel unter das Niveau N2 gesunken sein sollte, weil sich dann im Fangbehälter S Schwimmstoffe verfestigen und sammeln könnten, die die spätere Betriebsaufnahme stören könnten. Beispielsweise wird mit einer Zeitschaltung die Pumpe 22 pro Tag für ca. 5 Minuten eingeschaltet.

Die Eigenentsorgung der Schwimmstoffe und das Umwälzen können ohne Einschränkung während des Betriebes der Abscheideanlage F durchgeführt werden.

Sind Sinkstoffe aus dem Fangbehälter F zu entsorgen, dann wird das Absperrorgan 14 geöffnet, damit die Sinkstoffe in den linken Container C gelangen. Gegebenenfalls ist das Absperrorgan 14 permanent offen, so daß der linke Container C wie ein externer Sumpf des Fangbehälters S wirkt, in dem sich die Sinkstoffe allmählich sammeln und dabei das Restwasser aufgrund des höheren spezifischen Gewichtes der Sinkstoffe selbsttätig in den Fangbehälter S zurückdrücken. Bei einer Gesamtentleerung der Anlage kann die Pumpe 12 benutzt werden, um den Inhalt des Abscheidebehälters A in den Fangbehälter S zu pumpen und über dessen Absperrorgan abzulassen.

Die Abscheideanlage F gemäß Fig. 2 unterscheidet sich von der von Fig. 1 durch eine Modifikation der Hilfsströmungsverbindungs-Einrichtung H. Diese besteht aus getrennten ersten und zweiten Leitungen E und P, wobei in der ersten Leitung E das Absperrorgan 19 und in der zweiten Leitung P die Pumpe 22 enthalten ist. Die zweite Leitung P ist eine Rohrleitung 20 entsprechend der Rohrleitung 20 von Fig. 1. Strichliert ist in Fig. 2 im Abscheidebehälter A ein Absaugtrichter 26 beim Boden des Abscheidebehälters angedeutet, der das Absaugen von Sinkstoffen erleichtert.

Die erste Leitung E ist eine kurze Rohrleitung 16', deren Einlaßmündung 17 in etwa knapp oberhalb der Höhenmitte des Fangbehälters S und deren Auslaßmündung 18 in etwa auf gleicher Höhe oder höher bzw. tiefer in der Überströmleitung 3 liegt. Die erste Leitung E ist auf diese Weise über die Überströmleitung 3 mit dem Abscheidebehälter A verbunden, um zum Eigenentsorgen das nötige Abwasservolumen bzw. den hydrostatischen Druck aus dem Fangbehälter S in den Abscheidebehälter A zu übertragen. Die Funktion der Abscheideanlage F gemäß Fig. 2 entspricht der von Fig. 1.

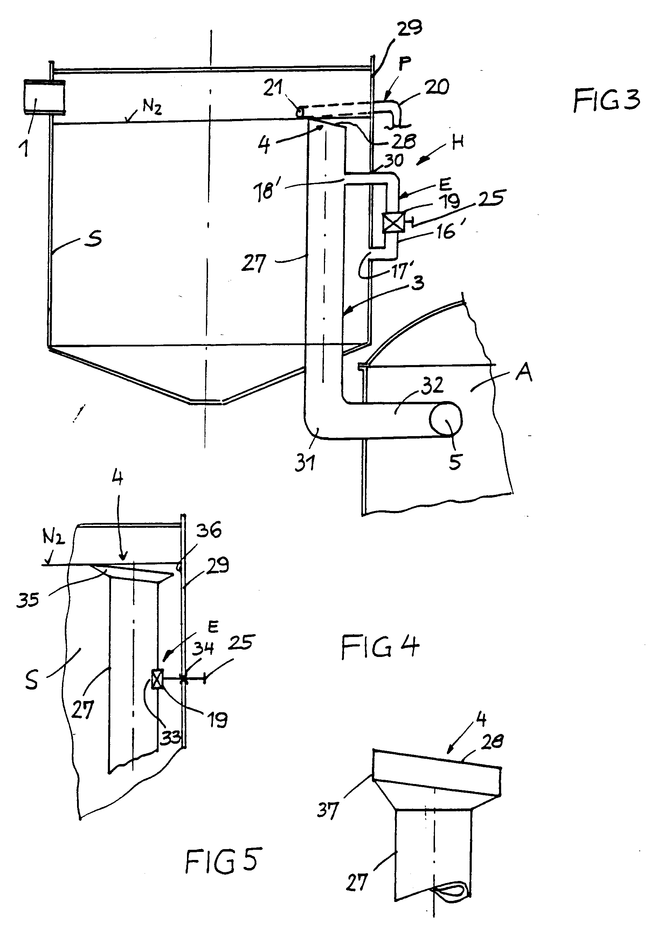

In Fig. 3 weist die Überströmleitung 3 vom Fangbehälter S zum Abscheidebehälter A ein im Inneren des Fangbehälters S vorgesehenes Standrohr 27 auf, dessen Abschluß 4 eine im Inneren des Fangbehälters S liegende und z.B. zu einer Wand 29 schräg nach unten geneigte Anschlußmündung 28 bildet. In Abhängigkeit vom Betriebswasserspiegel N2 ergibt dies eine relativ große Einströmgeschwindigkeit in das Standrohr 27, wodurch Schwimmstoffe allgemein wirksam und besonders von der Wand 29 gezielt abgezogen werden. Sinkt nämlich der Betriebswasserspiegel N2 unter das ausgezogen gezeichnete Niveau, dann strömt das Abwasser in Fig. 3 zunehmend nur von der rechten Seite in das Standrohr 27 ein.

Die Hilfsströmungsverbindungs-Einrichtung H besteht aus den getrennten ersten und zweiten Leitungen E und P, wobei die zweite Leitung P eine Rohrleitung 20 wie in den Fig. 1 und 2 ist.

Die erste Leitung E ist eine kurze Rohrleitung 16'', deren Einlaßmündung 17' in der Wand 29 des Fangbehälters S oder innerhalb des Fangbehälters S liegt. Von der Einlaßmündung 17' erstreckt sich die Rohrleitung 16'' durch die Wand 29 nach außen zum Absperrorgan 19, dessen Betätigungselement mit 25 angedeutet ist. Anschließend an das Absperrorgan 19 verläuft die Rohrleitung 16'' durch einen Durchlaß 30 in der Wand 29 und bis zu der im Standrohr 27 angeordneten Auslaßmündung 18'. Der Höhenabstand zwischen der Auslaßmündung 18' und dem Betriebswasserspiegel N2 ist so gewählt, daß in jedem Fall ein ausreichendes Volumen zum Herausdrücken der Schwimmstoffe aus dem Abscheidebehälter A zur Verfügung steht.

Das untere Ende des Standrohres 27 ist über ein Rohrknie 31 mit einem in etwa horizontalen Rohrstück 32 verbunden, das mit der Mündung 5 im Inneren des Abscheidebehälters A endet. Die erste Leitung E dient gleichzeitig als Halterung für das Standrohr 27 im Fangbehälter S. Die Funktion ist gleich wie bei den Ausführungsformen der Fig. 1 und 2.

In Fig. 4 ist die (nicht gezeigte) zweite Leitung P wie in den Fig. 1 bis 3 ausgelegt. Die erste Leitung E wird durch das direkt in das Standrohr 27 eingebaute Absperrorgan 19 in dessen Durchgangsstellung gebildet. Vom Absperrorgan 19 führt ein Betätigungselement 25 durch die Wand 29 des Fangbehälters S nach außen (abgedichtete Durchgangsöffnung 34). Anstelle eines Absperrorgans könnte auch eine Klappe 33 vorgesehen sein.

Der Anschluß 4 des Standrohres 27 ist mit einer trichterartigen Erweiterung 35 versehen, die zum nächstlie- genden Wandbereich 36 der Wand 29 schräg abfällt. Die trichterartige Erweiterung 35 verlängert die Überlaufkante für das Abwasser. Die schräge Neigung der Erweiterung 35 erzeugt hohe Einströmgeschwindigkeiten und das Abfördern von Schwimmstoffen, vor allem vom benachbarten Wandbereich 36.

In Fig. 5 ist eine Detailvariante des Standrohres 27 erkennbar, bei der anstelle der trichterförmigen Erweiterung 35 von Fig. 4 ein trichterartiges Aufsatzstück 37 vorgesehen ist, das die schrägliegende Anschlußmündung 28 definiert und eine verlängerte Einlaufkante bildet. Das Aufsatzstück 37 ist schräg auf das obere, horizontal liegende Ende des Standrohres 27 aufgesetzt.

Die Ausbildung der Überlaufleitung 3 gemäß den Fig. 3,4 und 5 kann auch bei der Ausbildung gemäß Fig. 1 benutzt werden, um den Abscheidebehälter A möglichst nahe an den Fangbehälter S hinsetzen zu können und verbesserte Einströmverhältnisse für das Abwasser zu schaffen.

## Patentansprüche

1. Abscheideanlage (F) für mit Schwimmstoffen und Sinkstoffen belastetes Abwasser, insbesondere Fettabscheideanlage, mit einem zulaufseitigen Sinkstoff-Fangbhälter (S), der über eine Überströmleitung (3) mit wenigstens einem ablaufseitigen, oben verschlossenen und ohne Freispiegel betreibbaren Schwimmstoff-Abscheidebehälter (A) verbunden ist, mit einem im Abscheidebehälter (A) oben angeordneten, absperrbaren Schwimmstoffabzug (Z) zum Herausdrücken abgeschiedener Schwimmstoffe mittels hydrostatischen Abwasserdrucks, wobei der Zulauf (1) zum Fangbehälter (S) und der Ablauf (7) vom Abscheidebehälter (A) höher angeordnet sind, als der Schwimmstoffabzug (Z), und mit einer unterhalb eines Einlasses der Überströmleitung (3) in Fangbehälter (S) an den Fangbehälter (S) angeschlossenen, ein Absperrorgan (19) und eine Pumpe (22) enthaltenden Hilfsströmungsverbindungs-Einrichtung (H) zwischen dem Fangbehälter (S) und dem Abscheidebehälter (A),
**dadurch gekennzeichnet,**
daß die Hilfsströmungsverbindungs-Einrichtung (H) aus zwei getrennt verlaufenden Leitungen (E,P) besteht, deren erste (E) das Absperrorgan (19) und deren zweite (P) die Pumpe (22) enthält.

2. Abscheideanlage nach Anspruch 1, **dadurch gekennzeichnet,** daß die erste Leitung (E,16) im Fangbehälter (S) eine Einlaßmündung (17) auf einem unterhalb des Betriebs-Abwasserspiegels (N2) und oberhalb des SinkstoffAbscheideniveaus liegenden Niveau (N5) und im Abscheidebehälter (A) eine Auslaßmündung (18) auf einem unterhalb des Schwimmstoff-Abscheideniveaus liegenden Niveau (N6) aufweist.

3. Abscheideanlage nach Anspruch 1, **dadurch gekennzeichnet**, daß die erste Leitung (E,16') im Fangbehälter (S) eine Einlaßmündung (17) auf einem unterhalb des Betriebs-Abwasserspiegels (N2) und oberhalb des SinkstoffAbscheideniveaus liegenden Niveau und eine an die Überströmleitung (3) auf einem unterhalb des Betriebs-Abwasserspiegels (N2) angeschlossene Auslaßmündung (18) aufweist und über die Überströmleitung (3) mit dem Abscheidebehälter (A) verbunden ist.

4. Abscheideanlage nach Anspruch 1, **dadurch gekennzeichnet,** daß die Überlaufleitung (3) ein im Inneren des Fangbehälters (s) angeordnetes Standrohr (27) aufweist.

5. Abscheideanlage nach den Ansprüchen 1 und 4, **dadurch gekennzeichnet,** daß die erste Leitung (E,16'') zum Absperrorgan (19) aus dem Fangbehälter (S) herausgeführt ist und von außen durch die Wand (29) des Fangbehälters (S) zurück bis in das Standrohr (27) der Überlaufleitung (3) verläuft.

6. Abscheideanlage nach Anspruch 5, **dadurch gekennzeichnet,** daß die erste Leitung (E,16'') eine Halterung für das Standrohr (27) im Fangbehälter (S) bildet.

7. Abscheideanlage nach den Ansprüchen 1 und 4, **dadurch gekennzeichnet,** daß das Absperrorgan (19) im oder am Standrohr (27) direkt angeordnet ist, in offener Stellung die erste Leitung (E) bildet, und eine durch die Wand (29) des Fangbehälters (S) nach außen geführte Betätigung (25) aufweist.

8. Abscheideanlage nach wenigstens einem der Ansprüche 1 bis 7, **dadurch gekennzeichnet,** daß zwischen dem Niveau der Einlaßmündung (17) und/oder der an die Überströmleitung (3) bzw. das Standrohr (27) angeschlossenen Auslaßmündung (18,18') und dem Betriebswasserspiegel (N2) im Fangbehälter (S) ein Volumen von mindestens ca. 80 l vorgesehen ist.

9. Abscheideanlage nach wenigstens einem der Ansprüche 1 bis 8, **dadurch gekennzeichnet,** daß die Pumpe (22) in der zweiten Leitung (P,20) mit Förderrichtung zum Fangbehälter (S) angeordnet, und vorzugsweise, selbsttätig absperrend ausgebildet ist.

10. Abscheideanlage nach den Ansprüchen 1 und 9, **dadurch gekennzeichnet,** daß die zweite Leitung (P,20) im Fangbehälter (S) eine Mündung (21) in etwa auf der Höhe des Betriebswasserspiegels (N2) und im Abscheidebehälter (A) eine Mündung (24) in der Nähe des Bodens aufweist.

11. Abscheideanlage nach Anspruch 4, **dadurch gekennzeichnet,** daß das Standrohr (27) im Fangbehälter (S) außermittig angeordnet ist und eine Einlaßmündung (28) aufweist, die vorzugsweise in Richtung zum nächstliegenden Wandbereich (36) der Wand (29) des Fangbehälters (S) schräg abfällt.

12. Abscheideanlage nach Anspruch 11, **dadurch gekennzeichnet,** daß die Einlaßmündung (28) trichterartig erweitert (35) ausgebildet ist, vorzugsweise mit einem gegenüber dem Enddurchmesser des Standrohres (27) vergrößerten und schräggestellten Aufsatzstück (37).

13. Abscheideanlage nach Anspruch 11, **dadurch gekennzeichnet,** daß die zweite Leitung (P, 20) im Abscheidebehälter (A) an einen bodenseitigen Absaugtrichter (26) angeschlossen ist.

## Claims

1. Separation plant (F) for waste water contaminated with floating matter and deposited matter, particularly a grease separation plant, having a trap (S) on the inlet side for catching deposited matter, which is connected via an overflow pipe (3) to at least one settling tank (A) for floating matter on the outlet side, which is closed off at the top and can be operated with no free level, said separation plant further having a closable discharge point (Z) for floating matter, mounted at the top of the settling tank (A), for forcing out deposited floating matter by the hydrostatic pressure of the waste water, the inlet (1) to the trap (S) and the outlet (7) from the settling tank (A) being arranged higher than the discharge point (Z) for floating matter, and having an auxiliary flow connecting device (H) between the trap (S) and the settling tank (A), which is attached to the trap (S) below an inlet of the overflow pipe (3) in the trap (S) and which contains a blocking member (19) and a pump (22), characterised in that the auxiliary flow connecting device (H) comprises two separately extending pipes (E, P), the first of which (E) contains the locking member (19) while the second (P) contains the pump (22).

2. Separation plant according to claim 1, characterised in that the first pipe (E, 16) has an inlet opening (17) in the trap (S) on a level which is below the operating level of the waste water (N2) and above the settling level of the floating matter (N5), and has an outlet opening (18) in the settling tank (A) at a level (N6) below the settling level of the floating matter.

3. Separation plant according to claim 1, characterised in that the first pipe (E, 16') has an inlet opening (17) in the trap (S) at a level below the operating level of the waste water (N2) and above the settling level of the floating matter and an outlet opening (18) connected to the overflow pipe (3) below the operating level of the waste water (N2) and is connected to the settling tank (A) via the overflow pipe (3).

4. Separation plant according to claim 1, characterised in that the overflow pipe (3) has a standpipe (27) mounted inside the trap (S).

5. Separation plant according to claims 1 and 4, characterised in that the first pipe (E, 16'') leads out of the trap (S) to the blocking member (19) and runs back from the outside through the wall (29) of the trap (S) into the standpipe (27) of the overflow pipe (3).

6. Separation plant according to claim 5, characterised in that the first pipe (E, 16'') forms a support for the standpipe (27) in the trap (S).

7. Separation plant according to claims 1 and 4, characterised in that the blocking member (19) is mounted directly in or on the standpipe (27), in the open position forms the first pipe (E) and has an actuator (25) passing outwards through the wall (29) of the trap (S).

8. Separation plant according to at least one of claims 1 to 7, characterised in that, between the level of the inlet opening (17) and/or the outlet opening (18, 18') attached to the overflow pipe (3) or standpipe (27) and the operational water level (N2) in the trap (S), there is a volume of at least about 80 litres.

9. Separation plant according to at least one of claims 1 to 8, characterised in that the pump (22) in the second pipe (P,20) is arranged to convey its contents in the direction of the trap (S) and is preferably constructed to be self-locking.

10. Separation plant according to claims 1 and 9, characterised in that the second pipe (P,20) has an opening (21) in the trap (S) substantially at the same height as the operational water level (N2) and has an opening (24) in the settling tank (A) close to the bottom.

11. Separation plant according to claim 4, characterised in that the standpipe (27) is eccentrically mounted in the trap (S) and has an inlet opening (28) which preferably falls away diagonally towards the nearest section (36) of the wall (29) of the trap (S).

12. Separation plant according to claim 11, characterised in that the inlet opening (28) is constructed to open out in a funnel shape (35), preferably with an attachment (37) which is larger than the terminal diameter of the standpipe (27).

13. Separation plant according to claim 11, characterised in that the second pipe (P,20) is attached in the settling tank (A) to an extractor funnel (26) on the bottom.

## Revendications

1. Séparateur (F) pour eaux usées contenant des matières surnageantes et des matières lourdes, en particulier séparateur de graisse, comprenant un récipient collecteur (S) de matières lourdes qui est situé côté arrivée et est relié par une conduite de trop-plein (3) à au moins un récipient séparateur (A) de matières surnageantes qui est situé côté évacuation, est fermé en haut et peut être exploité sans écoulement libre, comprenant un extracteur (Z) de matières surnageantes qui est situé en haut dans le récipient séparateur (A), peut être bloqué et est destiné à expulser des matières surnageantes séparées au moyen de la pression hydrostatique des eaux usées, l'arrivée (1) dans le récipient collecteur (S) et la sortie (7) du récipient séparateur (A) étant situées plus haut que l'extracteur (Z) de matières surnageantes, et comprenant entre le récipient collecteur (S) et le récipient séparateur (A), un dispositif de communication d'écoulement auxiliaire (H) qui est raccordé au récipient collecteur (S), au-dessous d'une entrée de la conduite de trop-plein (3) dans le récipient collecteur (S) et contient un organe d'arrêt (19) et une pompe (22),
caractérisé en ce que
le dispositif de communication d'écoulement auxiliaire (H) est formé de deux conduites (E, P) séparées dont la première (E) contient l'organe d'arrêt (19) et la deuxième (P) la pompe (22).

2. Séparateur selon la revendication 1, caractérisé en ce que la première conduite (E, 16) comporte dans le récipient collecteur (S) un orifice d'entrée (17) à un niveau (N5) inférieur au niveau d'eaux usées de service (N2) et supérieur au niveau de séparation de matières lourdes, et dans le récipient séparateur (A) un orifice de sortie (18) à un niveau (N6) inférieur au niveau de séparation de matières surnageantes.

3. Séparateur selon la revendication 1, caractérisé en ce que la première conduite (E, 16') dans le récipient collecteur (S) comporte un orifice d'entrée (17) à un niveau inférieur au niveau d'eaux usées de service (N2) et supérieur au niveau de séparation de matières lourdes, et un orifice de sortie (18) raccordé à la conduite de trop-plein (3) à un niveau inférieur au niveau d'eaux usées de service (N2), et est reliée au récipient séparateur (A) par la conduite de trop-plein (3).

4. Séparateur selon la revendication 1, caractérisé en ce que la conduite de trop-plein (3) comporte un tuyau vertical (27) disposé à l'intérieur du récipient collecteur (S).

5. Séparateur selon les revendications 1 et 4, caractérisé en ce que la première conduite (E, 16'') sort du récipient collecteur (S) en direction de l'organe d'arrêt (19), et à partir de l'extérieur retraverse la paroi (29) du récipient collecteur (S) pour revenir jusque dans le tuyau vertical (27) de la conduite de trop-plein (3).

6. Séparateur selon la revendication 5, caractérisé en ce que la première conduite (E, 16'') forme un support pour le tuyau vertical (27) dans le récipient collecteur (S).

7. Séparateur selon les revendications 1 et 4, caractérisé en ce que l'organe d'arrêt (19) est disposé directement dans ou sur le tuyau vertical (27), forme en position ouverte la première conduite (E), et comporte un dispositif d'actionnement (25) guidé vers l'extérieur à travers la paroi (29) du récipient collecteur (S).

8. Séparateur selon au moins une des revendications 1 à 7, caractérisé en ce qu'un volume d'au moins environ 80 l est prévu entre le niveau de l'orifice d'entrée (17) et/ou de l'orifice de sortie (18, 18') raccordé à la conduite de trop-plein (3) ou au tuyau vertical (27), et le niveau d'eaux usées de service (N2) dans le récipient collecteur (S).

9. Séparateur selon au moins une des revendications 1 à 8, caractérisé en ce que la pompe (22) dans la deuxième conduite (P, 20) refoule en direction du récipient collecteur (S) et est de préférence à blocage automatique.

10. Séparateur selon les revendications 1 et 9, caractérisé en ce que la deuxième conduite (P, 20) comporte dans le récipient collecteur (S) un orifice (21) sensiblement à la hauteur du niveau d'eaux usées de service (N2), et dans le récipient séparateur (A), un orifice (24) à proximité du fond.

11. Séparateur selon la revendication 4, caractérisé en ce que le tuyau vertical (27) est disposé en position excentrée dans le récipient collecteur (S) et comporte un orifice d'entrée (28) qui descend en biais de préférence en direction de la zone de paroi (36) la plus proche de la paroi (29) du récipient collecteur (S).

12. Séparateur selon la revendication 11, caractérisé en ce que l'orifice d'entrée (28) présente un élargissement (35) en forme d'entonnoir, de préférence avec un élément rapporté (37) incliné et agrandi par rapport au diamètre terminal du tuyau vertical (27).

13. Séparateur selon la revendication 11, caractérisé en ce que la deuxième conduite (P, 20) est raccordé dans le récipient séparateur (A) à un entonnoir d'aspiration (26) côté fond.
